# EUROPÄISCHE PATENTSCHRIFT

(11) **EP 1 370 406 B1**
(45) Veröffentlichungstag und Bekanntmachung des Hinweises auf die Patenterteilung: **04.05.2005**
(21) Anmeldenummer: 02702380.3
(22) Anmeldetag: 28.02.2002
(51) Int. Cl.: B29C 49/46

(54) **VERFAHREN ZUM BLASFORMEN EINES BEHÄLTERS AUS KUNSTSTOFF UND ZUM BESCHICHTEN DES BEHÄLTERINNEREN**
METHOD FOR BLOW FORMING A CONTAINER MADE OF PLASTIC AND FOR COATING THE INSIDE OF SAID CONTAINER
PROCEDE POUR LE MOULAGE PAR SOUFFLAGE D'UN CONTENANT EN PLASTIQUE ET POUR LE REVETEMENT DE L'INTERIEUR DU CONTENANT

(30) Priorität: 23.03.2001 DE 10114401
(43) Veröffentlichungstag der Anmeldung: 17.12.2003
(73) Patentinhaber: Tetra Laval Holdings & Finance S.A., 1009 Pully (CH)
(72) Erfinder: CHATARD, Dominique, 69121 Heidelberg (DE); GRÜNWALD, Heinrich, 61194 Niddatal (DE); LOTHAR, Wilhelm, 61184 Karben (DE); KÄSS, Hanno, 64287 Darmstadt (DE)
(74) Vertreter: Weber, Dieter, Dr.
(86) Internationale Anmeldenummer: PCT/EP2002/002160
(87) Internationale Veröffentlichungsnummer: WO 2002/076709

(56) Entgegenhaltungen:
- WO-A-98/06559
- DE-A- 4 438 359
- US-A- 3 236 080
- US-A- 5 622 735
- PATENT ABSTRACTS OF JAPAN vol. 005, no. 076 (M-069), 20. Mai 1981 (1981-05-20) -& JP 56 027330 A (YOSHINO KOGYOSHO CO LTD), 17. März 1981 (1981-03-17) -& DATABASE WPI Week 198119 Derwent Publications Ltd., London, GB; AN 1981-33291D XP002202554 & JP 56 027330 A
- PATENT ABSTRACTS OF JAPAN vol. 011, no. 352 (M-643), 18. November 1987 (1987-11-18) -& JP 62 130823 A (HONDA MOTOR CO LTD), 13. Juni 1987 (1987-06-13)

## Beschreibung

Die Erfindung betrifft ein Verfahren zum Blasformen eines Behälters aus einem Vorformling aus Kunststoff, der nach Erwärmen durch ein mit Niederdruck von zwischen 2 bar und 15 bar in den Behälter eingeblasenes Gas unter Vergrößerung seines Innenvolumens vorgeformt wird und durch Zünden eines eingeblasenen, brennfähigen Gases durch den bei der Verbrennung entstehenden höheren Gasdruck in seine endgültige Gestalt geformt wird.

Beim Blasformen des endgültigen Behälters geht man von einem Vorformling aus, der üblicherweise aus dem Material Polyethylenterephthalat besteht und spritzgeformt ist. Das Vorformen bei Niederdruck führt zu einem Zwischenformling (vor der ersten Verbrennung). Nach der Verbrennung (zum Beispiel schon der ersten Verbrennung) erhält man den fertigen Behälter (Endformling) in seiner endgültigen Gestalt. Unter "Formling" wird jeder der drei Formzustände verstanden.

Es ist bekannt, Kunststoffbehälter aus Polyethylen durch Extrudieren des geschmolzenen Kunststoffes in Gestalt eines Schlauches herzustellen, wobei die Endformung durch Einblasen eines Gases in einen Formhohlraum erfolgt (Extrusionsblasformen). Steifere Kunststoffe, wie zum Beispiel PET (Polyethylenterephthalat), werden aus einem vorerwärmten Vorformling unter mechanischem Strecken in einen Formhohlraum geblasen (Streckblasformen). Der Innenraum des Formhohlraumes entspricht dem fertigen Behälter, der zum Beispiel ähnlich einer Flasche ein offenes Ende hat, welches mit einer Aufnahme mit Gaszuführleitungen gehalten ist.

Aus der internationalen Veröffentlichung WO 98/06 559 ist eine Weiterentwicklung des Verfahrens zum Streckblasformen von PET-Flaschen bekannt, das man als "Explosions-Streckblasformen" bezeichnen kann. Der vorgeformte Vorformling wird danach auf eine für das Streckblasen geeignete Temperatur von etwa 100 -120°C erwärmt und in die Werkzeugform eingebracht. Das eingangs erwähnte Verfahren erzeugt den Niederdruck des in die PET-Flasche eingeblasenen Gases, mit einem explosiven Gasgemisch, zum Beispiel einem Gemisch aus Knallgas und einem Inertgas. Durch Zünden dieses Gasgemisches entsteht der erwähnte höhere Blasdruck, welcher die Wandung des Zwischenformling bzw. des teilweise vorgeformten Behälters ganz an die Innenwand der Form drückt. Das explosive Gasgemisch, d.h. das eingeblasene, brennfähige Gas, ist ein Gemisch eines Oxidationsmittels beispielsweise Sauerstoff und eines oxidierbaren Bestandteiles, wie zum Beispiel Wasserstoff, Methan oder dergleichen.

Solche bekannten PET-Flaschen werden vielfach für die Verpackung zum Beispiel von Wasser verwendet. Man weiß, daß die Wandungen solcher PET-Flaschen für niedermolekulare Gase durchlässig sind. Im Falle verpackter flüssiger Lebensmittel, insbesondere von Säften und CO₂-haltigen Getränken, sind die Haltbarkeitszeiten folglich begrenzt. Um den dafür verantwortlichen Sauerstoff am Eindringen bzw. das Kohlendioxid am Entweichen zu hindern und um damit solche Kunststoffverpackungen für flüssige Lebensmittel besser anwendbar zu machen, ist man bereits dazu übergegangen, Wandungen dieser Kunststoffpackungen innen oder außen zu beschichten. Ein Beispiel für einen solchen bekannten Beschichtungsprozeß zur Verbesserung dieser sogenannten Sperr- oder Barriereeigenschaft von Kunststoffpackungen ist die plasmagestützte chemische Abscheidung aus der Gasphase. Im Falle der Innenbeschichtung wird hierbei ein Gasgemisch in die den Behälter darstellende Packung eingeführt. Elektromagnetische Energie wird eingestrahlt, zündet das Plasma, und im Inneren des Behälters wird bei diesem Behandlungsprozeß zum Beispiel ein glasartiges Siliziumoxid oder eine amorphe Kohlenstoffschicht aufgetragen. Niedermolekulares Gas, zum Beispiel Sauerstoff oder Kohlendioxid, kann durch diese zusätzliche Barriere die Kunststoffwände wesentlich langsamer durchdringen, und es können auch nicht mehr organische Verbindungen in den Kunststoff eindringen mit der Folge, daß im Falle von verpackten flüssigen Lebensmitteln die Getränke dadurch ihren Geschmack, ihr Aroma und ihre Qualität wesentlich länger halten können.

Man hat andererseits schon versucht einen Behälter durch Blasformen herzustellen, wobei das zum Blasformen verwendete Gas bereits ein Prozeßgas ist, mit dessen Hilfe der blasgeformte Behälter durch Vakuumbedampfung innen mit einer Sperrschicht versehen wird, die aus einer Siliziumverbindung besteht. Für die Beschichtungsherstellung hat man hier das herkömmliche chemische Plasmadampfabscheiden durchgeführt, wobei das Plasma durch ein elektrisches Mikrowellenfeld gezündet wurde. Hierzu sind umfangreiche Maschinenanlagen erforderlich, und außerdem wurde beim Blasformen zunächst ein hoher Druck in dem Behälter von etwa 40 bar erzeugt, welcher danach mit entsprechendem Zeitaufwand auf Vakuum entspannt werden mußte, um die plasmagestützte Beschichtung durchzuführen. Abgesehen von der Langwierigkeit dieses Verfahrens beim Umschalten vom Hochdruck auf Vakuum und der Verwendung großer Maschineneinrichtungen zeigte sich auch, daß die Ausbeute der verwendeten Gase so gering ist, daß eine industrielle Anwendbarkeit nicht in Frage kommt.

Es besteht daher das Bedürfnis, Beschichtungen mit hoher Sperrwirkung auf der Innenseite von Kunststoffbehältern möglichst gleich nach oder sogar während des Herstellungsprozesses des Behälters anzubringen. Die Innenbeschichtung ist besonders günstig, weil Aromastoffe oder dergleichen sonst in die Behälterwandung eintreten können. Bei der Herstellung von Behältern aus Kunststoffen, insbesondere PET, HDPE, Polyacrylnitril oder Polykarbonat soll der Blasformprozeß mit dem Beschichtungsprozeß kombiniert werden.

Aufgabe der Erfindung ist daher die Schaffung eines Blasformverfahrens der eingangs genannten Art, mit welchem ein Behälter, zum Beispiel eine PET-Flasche, im Verlaufe des Formgebungsprozesses oder unmittelbar danach auf seiner Innenseite mit einer Sperrschicht versehen wird, die für Gase, Aromastoffe und dergleichen undurchlässig ist, ohne daß man große Maschinen, Vakuumanlagen und dergleichen einsetzen muß.

Diese Aufgabe wird erfindungsgemäß dadurch gelöst, daß dem brennfähigen Gas ein Präkursor-Gas zugemischt wird, dieses Gemisch gezündet wird und durch die Verbrennung eine Sperr- oder Barrierebeschichtung auf der inneren Oberfläche des Behälters gebildet wird.

Mit dem erfindungsgemäßen Verfahren werden Behälter durch Blasformen hergestelit, die aus Kunststoff gefertigt sind, wie oben angegeben. Zu diesen Behältem kann man auch Verpackungen rechnen, wobei aile Arten von Behältern in Betracht gezogen werden, die durch Blasformen herstellbar sind, insbesondere einseitig offene Flaschen. Bei den bekannten Blasformverfahren erfolgt spätestens die Endformung in einem Formhohlraum, Behälter können aber auch ohne einen solchen Hohlraum blasgeformt werden. Zum Blasformen werden Vorformlinge verwendet, die im allgemeinen ein kleineres Innenvolumen als das letztlich durch Endformen des Behälters gebildete Innenvolumen haben. Solche Vorformlinge können auch durch Spritzgießen hergestellt sein. Die Vorformlinge können die Gestalt eines länglichen Rohres oder einer Flasche haben. Es gibt aber auch Vorformlinge aus einem extrudierten Schlauchstück, weiches an den gewünschten Enden zusammengedrückt und verschweißt sein kann. Ein solcher Vorformling ist entweder nach dem Herstellungsverfahren noch warm oder wird auf etwa 100°C oder 120°C erwärmt, um blasfähig zu werden.

Das Blasformen gemäß der Erfindung erfolgt zunächst in einem ersten Schritt, bei welchem ein Gas unter Niederdruck im Bereich zwischen 2 und 15 bar in den Vorformling zur Bildung eines Zwischenformlings eingeblasen wird. Das Innenvolumen des Vorformlings wird dadurch vergrößert und der Behälter auf diese Weise vorgeformt.

Sodann erfolgt das Endformen des Behälters in seine endgültige Gestalt in einem zweiten Schritt durch Einblasen eines brennfähigen Gases, welches dann gezündet wird und durch die Verbrennung, insbesondere durch eine explosionsartige Verbrennung, einen höheren Blasdruck entstehen läßt. Nach Aufbringen dieses Biasdruckes ist der Behälter in seine endgültige Gestalt geformt.

Ein nach diesem Verfahren hergestellter Behälter ist auf seiner inneren Oberfläche aber noch nicht beschichtet. Erfindungsgemäß werden nun durch die vorstehenden Merkmale Maßnahmen angegeben, daß die gewünschte Beschichtung als Sperrschicht in Kombination mit den Blasformschritten hergestellt wird, so daß bei einer bevorzugten Ausführungsform die Blasformmaschine sogar mit der Beschichtungsmaschine identisch sein kann.

Gesonderte Beschichtungsmaschinen sind durch die erfindungsgemäßen Maßnahmen nicht mehr erforderlich. Es wird erfindungsgemäß ein Präkursor-Gas oder Vorläufergas auf der vorstehend angegebenen Basis, zum Beispiel auf Silizium- oder Kohlenwasserstoffbasts, dem brennfähigen Gas zugemischt und durch Zündung der Verbrennung zugeführt, so daß durch die Verbrennung die Beschichtung auf der genannten Basis, zum Beispiel Siliziumoxidbasis oder auf organischer Kohlenstoffbasis, auf der Inneren Oberfläche des Behälters gebildet wird.

Erfindungsgemäß wird die potentielle chemische Energie, insbesondere die durch die rasche Verbrennung gewonnene Energie, verwendet, um mit hoher Geschwindigkeit im Inneren des Behälters die angestrebte Beschichtung zu erzeugen. Dieser Verbrennungsschritt erlaubt nicht nur eine billige Beschichtung ohne großen Maschinenaufwand, sondern erzeugt gewünschtenfalls auch eine aseptische Verpackung, wobei der Behälter unmittelbar nach seiner Herstellung aseptisch ist.

Bei einer ersten Ausführungsform ist es erfindungsgemäß besonders vorteilhaft, wenn das Präkursor-Gas auf Silizium-, Magnesium-, Aluminium-, Titan-, Zink-, Zirkonlum-, Bor-, Cer-, Kalzium- oder Zinnbasis oder dergleichen oder auf der Basis von Gemischen hieraus gebildet wird und wenn sich eine Beschichtung auf Siliziumoxid-, Siliziumoxynitrid- Magnesiumoxid-, Aluminiumoxid-, Titanoxid-, Titannitrid-, Zinkoxid-, Zirkoniumoxid-, Boroxid-, Ceroxid-, Kalziumoxid- oder Zinnoxidbasis oder dergleichen oder auf der Basis von Gemischen hieraus ergibt. Das brennfähige Gasgemisch sollte bei dieser Ausführungsform vorzugsweise im Sauerstoff-Überschuß wirken. Man kann dadurch die Barrierewirkung der Barriereschichten optimieren. Die Schichten werden hierdurch vollständig oxidiert. D.h. ein Maximum von Sauerstoff- und/oder Stickstoffatomen werden hierzu eingebaut "Im Überschuß" bedeutet dabei, daß das brennfähige Gas einen höheren Sauerstoffanteil aufweist als zu seiner eigenen Verbrennung erforderlich wäre (oxidierende Betriebsart). Mit Vorteil wird der Sauerstoffanteil so gewählt, daß er ausreichend ist, auch die Präkursor-Verbindung vollständig zu oxidieren.

Als Präkursor- oder Vodäufermaterial wird für die hier ins Auge gefaßte erste Ausführungsform ein Vorläufergas auf Silizium-, Magnesium-, Aluminium-, Titan-, Zink-, Zirkonium- oder Borbasis oder dergleichen oder auf der Basis von Gemischen hieraus angegeben, wobei die Verbrennung dieses Gemisches des brennfähigen Gases und des Präkursor-Gases eine Sperr- oder Barrierbeschichtung der angegebenen Art gibt, welche aus einer im wesentlichen anorganischen Verbindung besteht, die stabile und dichte Strukturen in der Sperr- oder Barrierbeschichtung ausbildet.

Die Barriereschicht ist eine überwiegend oder völlig anorganische Verbindung, die typischerweise aus einem Metall- oder Halbmetall- sowie einem nichtmetallischen Anteil, wie Sauerstoff und/oder Stickstoff, besteht. Zusätzlich können auch Anteile von Kohlenstoff und Wasserstoff enthalten sein. Es handelt sich also typischerweise um Oxide, Nitride oder Oxynitride von Metallen wie: Aluminium, Magnesium, Titan, Zirkonium, Zink und/oder Halbmetallen, wie Silizium oder Bor.

Man kann eine solche, die Barriereschicht bildende anorganische Verbindung noch dichter gestalten, indem man Atome eines weiteren Metalls oder Halbmetalls in einem geringeren Anteil einlagert.

Bei einer bevorzugten Ausführungsform, nämlich durch Auswählen und geeignetes Reagterenlassen des Vorläufermaterials, kann man der chemischen Zusammensetzung der Beschichtung Kohlenstoff zufügen. Diese oder ähnliche Maßnahmen bewirken, daß die Beschichtungsstruktur nicht völlig steif oder starr ist. Durch die Reaktion bei dieser Ausführungsform (zum Beispiel Zugabe von Kohlenstoff) neigt dann die Beschichtung auch bei mechanischen Einwirkungen, zum Beispiel Strecken oder Biegen, weniger zum Brechen.

Ähnlich stabile und dichte Strukturen in der Sperr- oder Barrierebeschichtung erhält man für eine zweite Ausführungsform, wenn erfindungsgemäß das Präkursor-Gas aus mindestens einer flüchtigen Kohlenwasserstoffverbindung auf Basis von Alkanen oder Alkenen, Alkinen, Aromaten, Alkanolen, Äthern, Aldehyden, Ketonen, Epoxiden, organischen Säuren, Estern oder entsprechenden anderen Hydriden besteht. Dadurch ergibt sich eine Barriereschicht, die stabiler gegenüber Produkten mit pH-Werten im basischen Bereich (also über 7) ist und die Insbesondere mit Behälterwandungen aus Polyolefinen, wie zum Beispiel Polyethylen, Polypropylen, kompatibel ist. Ein Beispiel für Alkane ist Ethan, für Alkene etwa Ethen oder Propylen, für Alkine das Acetylen. Auch aromatische Verbindungen können eingesetzt werden, wie zum Beispiel Toluol. Man kann auch Sauerstoff enthaltende Kohlenwasserstoffe verwenden, wie Alkanole. Dafür sind Beispiele: Methanol, Ethanol, Propanol, Ethylenglykol. Ein Beispiel für Ether ist Dioxan; für Aldehyde Acetaldehyd, für Ketone Benzaldehyd, für Epoxide Propylenoxid, für organische Säuren die Essigsäure, für Ester zum Beispiel Essigsäureethylester und für Anhydride zum Beispiel Maleinsäureanhydrid.

Anstelle der im wesentlichen anorganischen Metalloxidschicht bei der einen Ausführungsform kann man also auch bei der anderen Ausführungsform eine organische Kohlenstoffschicht als Sperrschicht auf die Innenwand des Behälters aufbringen. Für das Aufbringen der organischen Kohlenstoffschicht werden in den vorgeblasenen oder ausgeformten Behälter zusätzlich zu der H₂/O₂-Mischung, deren Verbrennung zur Formung der Flasche führt, noch Kohlenwasserstoffverbindungen eingebracht. Für diesen Fall ist es notwendig, einen Sauerstoffüberschuß in dem Gasgemisch zu vermeiden, denn sonst würde eine vollständige Oxidation der Kohlenwasserstoffverbindung erfolgen und keine Schicht abgeschieden. Die Sauerstoffdosierung muß also so eingestellt werden, daß bei der Explosion genügend Energie für den Prozeß freigesetzt wird und dabei gleichzeitig der Wasserstoff der Kohlenwasserstoffverbindung genügend weitgehend verbraucht wird, um die Abscheidung einer genügend dichten Kohlenstoff-Sperrschicht zu ermöglichen.

Bei einer weiteren günstigen Ausführungsform besteht erfindungsgemäß das Präkursor-Gas aus einem Gemisch aus mindestens einer flüchtigen Metallverbindung und mindestens einer flüchtigen Kohtenwasserstoffverbindung. "Flüchtig" bedeutet erfindungsgemäß, daß die verwendete Metallverbindung bei Temperaturen Im Bereich der Raumtemperatur verdampft. Dies ist zum Beispiel bei Tetramethylsilan gegeben.

Eine weitere bevorzugte Ausführungsform der Erfindung ist dadurch gekennzeichnet, daß das Zumischen des Präkursor-Gases vor dem Vorformen erfolgt und die Sperr- oder Barrierebeschichtung beim Endformen gebildet wird. Dies bedeutet, daß man den Vorformling nach Erwärmen bereits mit dem ins Auge gefaßten Gasgemisch vorformt. Dieses Gasgemisch ist das brennfähige Gas, gemischt mit dem Vorläufergas.

Beispielsweise handelt es sich um Knallgas, gemischt mit Tetramethylsilan als Vorläufergas. Diese auch mit TMS abgekürzte, brennbare, flüchtige Flüssigkeit ist auch als Gas bekannt. Dieses Gasgemisch von zum Beispiel Knallgas plus TMS wird also zum Vorformen bei Niederdruck verwendet und im nächsten Schritt wie beim Explosions-Streckblasformen nach WO 98/06 559 gezündet, so daß der Behälter damit seine endgültige Gestalt erhält. Gleichzeitig damit werden die Innenwände des Behälters mit der gewünschten Sperr- oder Barrierebeschichtung versehen, die im Falle des Vorläufermaterials TMS eine Siliziumoxidbasis hat. Diese Beschlchtung hat hervorragende Sperreigenschaften.

Wenn man alternativ als brennfähiges Gas, gemischt mit dem Vorläufergas, Knallgas nimmt, gemischt mit Acetylen, dann wird dieses brennbare, flüchtige Gasgemisch von zum Beispiel Knallgas plus Acetylen zum Vorformen bei Niederdruck verwendet und im nächsten Schritt wie beim Explosions-Streckblasformen gezündet, so daß der Behälter damit seine endgültige Gestalt erhält, Gleichzeitig damit werden die Innenwände des Behälters mit der gewünschten Sperr- oder Barrierebeschichtung versehen, die im Falle des Vorläufermaterials Acetylen eine amorphe Kohlenstoffschicht ist. Diese Beschichtung hat wiederum hervorragende Sperrelgenschaften.

Eine weitere bevorzugte Ausführungsform ist erfindungsgemäß dadurch gekennzeichnet, daß das Präkursor-Gas nach dem Endformen in den Behälter eingeführt wird und durch das Zünden eine zweite Verbrennung zur Bildung der Sperr- oder Barrierebeschichtung auf der inneren Oberfläche des Behälters ausgelöst wird.

Das Vorformen mit Niederdruck. d.h. im Bereich zwischen 2 und 15 bar und vorzugsweise bei etwa 10 bar kann mit Luft oder auch - nach WO 98/06 559 - mit einem brennfähigen Gas durchgeführt werden. Das Endformen mit dem höheren Blasdruck erfolgt wie bei den bekannten Blasformverfahren in einem Druckbereich zwischen 20 bar und 600 bar, vorzugsweise bei etwa 40 bar. Bei Vorgehen nach WO 98/06 559 ist praktisch bereits Knallgas als brennfähiges Gas eingesetzt worden, welches zum Beispiel mit einer Zündkerze oder mit Laserlicht von außen gezündet wurde.

Erst nach diesem Endformen wird dann bei dieser zuletzt genannten Ausführungsform das Vorläufergas in den Behälter eingeführt, um nach Zünden eine schnelle Verbrennung zu erreichen. Das Verbrennen des Präkursor-Gases führt zur Bildung der Sperr- oder Barrierebeschichtung die sich auf der inneren Oberfläche des Behälters in der gewünschten Weise ablagert.

Wenn die Beschichtungsreaktion unter ungünstigen Randbedingungen und unter hohem Druck erfolgt, ist die Reaktion nicht immer leicht zu kontrollieren, es kann zur Staub-, Flockenbildung oder Sandbildung kommen. Die Reaktanden bilden dann nicht die gewünschte dichte Beschichtung, sondern bilden den Abfall Sand bzw. Staub oder Ruß. Man kann die Reaktanten allerdings ebenso wie die Prozeßparameter beeinflussen und richtig auswählen, um diese Staubbildung zu vermeiden.

So hat man beispielsweise Silane verwendet, die sich mit Sauerstoff selbst entzünden und explodieren. Diese Reaktion kann so schnell sein, daß die nachteilige Sandbildung festgestellt wird zu Lasten einer kompakten Beschichtung. Erfindungsgemäß hat man nun aber gefunden, daß man die Reaktion durch Verdünnen des Silans mit einem inerten Gas verlangsamen kann. Hierfür kann man Stickstoff, Argon, Helium oder ein Gemisch aus denselben verwenden. Durch diese wird die zur Staubbildung führende Gasphasenreaktion unterdrückt.

Die Reaktion kann durch die Substitution der Wasserstoffatome der Silanmoleküle durch weniger reaktive Strukturelemente verlangsamt werden, wie zum Beispiel Alkylgruppen oder Alkoxigruppen. Auch können Siloxane anstelle von Silanen verwendet werden. Zur Vermeidung der angesprochenen Sandbildung können Präkursor-Kombinationen und Gase so gewählt werden, daß immer nur eine anorganische Sperrschicht bei der Verbrennung erzeugt wird.

Gleiches gilt bei der Verwendung von Kohlenwasserstoffen. Die Kohlenwasserstoffverbindungen sollte man so auswählen, daß die Reaktion nicht zu schnell erfolgt, denn sonst wird Staub oder Ruß gebildet. Man erreicht dies durch die Verwendung von gesättigten Kohlenwasserstoffen. Andererseits bilden sich dichte - oder sogar diamantartige - Kohlenstoffschichten bevorzugt, wenn der Wasserstoffanteil in den Verbindungen gering ist, wenn also ungesättigte Kohlenwasserstoffe verwendet werden. Durch die Verwendung von gesättigten Kohlenwasserstoffen wird die Reaktion langsamer.

Das bedeutet, daß man durch die Wahl des Verhältnisses von gesättigten zu ungesättigten Kohlenwasserstoffen die Balance zwischen den beiden Effekten so einstellt, daß man am Ende eine gute Sperrwirkung der entstehenden Barriereschicht erzielt.

Durch die Wahl des Sauerstoffanteils im Gasgemisch kann man zusätzlich den Charakter der entstehenden Kohlenstoffbeschichtung beeinflussen, ob sie nämlich mehr den Charakter der diamantartigen Kohlenstoffbeschichtung oder der amorphen Kohlenstoffbeschichtung hat.

Bei diesen Ausführungsformen wird die Sperrschicht in einem letzten Verbrennungsschritt auf dem Behälterinneren abgelagert, nachdem der Behälter in seine Endform gebracht worden ist, zum Beispiel durch einen Exploslonsprozeß.

Bei einem praktischen Beispiel wurde ein Vorformling aus PET mit Luft bei einem Druck von 8 bar vorgeformt und dann durch Explosion eines Knallgasgemisches in seine Endgestalt einer Flasche gebracht. Nach dem Entspannen (nach dieser Explosion) wurde ein Gemisch aus TMS und Luft in den Behälter eingeführt und einer zweiten und letzten Verbrennung zugeführt, so daß eine Sperrschicht für Sauerstoff entstand.

Die vorstehend beschriebenen Ausführungsformen des Blasform- und Beschichtungsverfahrens nach der Erfindung, bei denen die Beschichtung bei hohem Druck erfolgte, tragen unter gewissen Prozeßbedingungen die Gefahr der Sandbildung in sich. Diese kann völlig ausgeschaltet werden, wenn man eine andere bevorzugte Ausführungsform vorsieht, die erfindungsgemäß dadurch gekennzeichnet ist, daß ein Präkursor-Material auf Basis einer Silizium-, Magnesium-, Aluminium-, Titan-, Zink-, Zirkonium-, Bor-, Cer-, Kalzium- oder Zinnverbindung oder dergleichen oder auf der Basis von Gemischen hieraus in Form eines Gases, Dampfes, Nebels oder duktilen Feststoffes als Vorschicht auf die innere Oberfläche eines Formlings aufgebracht wird, dann ein sauerstoffhaltiges, entflammbares. Gasgemisch in den Formling eingeführt und gezündet wird und durch diese Verbrennung die Sperr- oder Barrierebeschichtung auf Siliziumoxid-, Siliziumoxynitrid-, Magnesiumoxid-, Aluminiumoxid-, Titanoxid-, Titannitrid-, Zinkoxid-, Zirkoniumoxid-, Boroxid-, Ceroxid-, Kalziumoxid- oder Zinnoxidbasis oder dergleichen oder auf der Basis von Gemischen hieraus auf der inneren Oberfläche des Formlings gebildet wird. In den Formling wird nach dieser dritten Ausführungsform eine Vorschicht auf die Innere Oberfläche des Formlings aufgebracht. Man läßt diese dann in dem nachfolgenden Prozeßschritt zu der gewünschten Sperrschicht reagieren. Diese Vorschicht kann ein weiches Vormaterial sein, es muß nur an der Innenwand des Formlings haften und bei der Reaktion und Umwandlung zur Sperrschicht die Innenwand vollständig überdecken. Eine Staub- bzw. Sandbildung wie bei dem oben beschriebenen Hochdruckverfahren braucht hier nicht befürchtet zu werden. Die Vorschicht kann man auf die Innere Oberfläche des Vorformlings, des Zwischenformlings oder auch des fertigen Behälters, des Endformlings, aufbringen.

Das auf den Vor- oder Zwischenformling aufgebrachte Präkursor-Material sollte vorzugsweise einen Siedepunkt haben, der über der Innenwandtemperatur des Formlings liegt. Beim Aufbringen auf den Endformling genügt ein Siedepunkt >20°C, weil der Endformling gekühlt wird.

Analog kann man mit flüssigen Kohlenwasserstoffen vorgehen. Im Falle dieser flüchtigen, flüssigen Kohlenwasserstoffe kann man zum Beispiel paraffinartige Schichten erzeugen.

Die Vorschicht kann durch Aufsprühen, Aufkondensieren oder Aufpolymerisieren auf die innere Oberfläche des Formlings aufgebracht werden. Alternativ kann sie mit Hilfe einer Verbrennung aufgebracht werden, wobei die Verbrennung so zu führen ist, daß Staubbildung vermieden wird. Hierzu wird ein Unterschuß an oxidierenden Gasen eingesetzt. Dies bewirkt, daß die abgeschiedene Schicht nicht die Eigenschaft einer Barriereschicht hat, sondern vielmehr diese Barriereeigenschaften durch nachträgliche Reaktion der abgeschiedenen Schicht herbeigeführt werden.

Für das Überführen der Vorschicht in die Barriereschicht wird die Vorschicht einem Oxidationsprozeß unter Beteiligung von Sauerstoff oder Ozon unterzogen. Die Aktivierungsenergie hierfür wird durch einen Verbrennungsprozeß oder durch UV-Strahlung geliefert. So kann man als sauerstoffhaltiges, entflammbares Gasgemisch zum Beispiel Wasserstoff oder Ammoniak zusammen mit einem Überschuß an Sauerstoff verwenden, das in den Formling eingeführt und gezündet wird. Durch die rasche Verbrennung wird unter chemischer Umwandlung der Vorschicht die gewünschte Sperrschicht gebildet.

Für die Herstellung einer anorganischen Sperrschicht ist vorzugsweise das Knallgasgemisch so zusammengesetzt, daß der Sauerstoffanteil bezüglich der Verbrennung der Vorschicht im Überschuß vorliegt; d.h. der Sauerstoffanteil höher als für die gesamte Verbrennung der Vorschicht in zum Beispiel Siliziumoxid erforderlich ist, welches die Sperrschicht bildet. In diesem Falle spricht man von der oxidierenden Betriebsart. Diese ist dann zweckmäßig, wenn der Sauerstoff nicht nur für die Explosion oder Verbrennung, sondern auch zum Ausreagieren des Präkursor-Materials zur Sperrschicht benötigt wird. Diese zweite bzw. letzte Verbrennung oder Explosion dieses Gasgemisches läßt die Vorschicht zu einer festen, dichten Sperrschicht weiterreagieren, die im Falle eines Präkursor-Materials auf Siliziumbasis eine Beschichtung auf Siliziumoxidbasis ist.

Für die Herstellung einer diamantartigen oder amorphen Kohlenstoffsperrschicht darf natürlich nicht mit Sauerstoffüberschuß gearbeitet werden.

Für eine solche Kohlenstoffsperrschicht ist es erfindungsgemäß vorteilhaft, wenn ein Präkursor-Material, das aus mindestens einer flüchtigen Kohlenwasserstoffverbindung auf Basis von Alkanen, Alkenen, Alkinen oder Aromaten, Alkanolen, Ethem, Aldehyden, Ketonen, Epoxiden, organischen Säuren, Estern oder entsprechenden Anhydriden besteht, in Form eines Gases, Dampfes oder Nebels als Vorschicht auf die innere Oberfläche eines Formlings aufgebracht wird, dann ein sauerstoffhaltiges, entflammbares Gasgemisch in den Formling eingeführt und gezündet wird und durch diese Verbrennung eine Sperr- und Barrierebeschichtung auf Kohlenstoffbasis auf der inneren Oberfläche des Behälters gebildet wird.

Die Bildung der Sperrschicht gelingt auch einwandfrei, wenn man als sauerstoffhaltiges, oxidierendes Gas zum Beispiel Distickstoffoxid (N₂O) verwendet.

Die Sperrschicht kann sowohl Stickstoff als auch oder Kohlenstoff enthalten.

Vorteilhaft ist es gemäß der Erfindung, wenn bei einer weiteren Ausführungsform das sauerstoffhaltige, für die zweite Verbrennung entflammbare Gasgemisch Ozon enthält. Dieses Gas wird wieder nach der Ablagerung der Vorschicht auf der inneren Oberfläche des Behälters eingeführt und ist stark oxidierend. Die Einführung als Gas hat den Vorteil, daß alle Teile der inneren Oberfläche des Behälters mit diesem Gas In Kontakt kommen. Ozon hat außerdem den Vorteil, daß es kommerziell preiswert und in großer Menge durch zur Verfügung stehende Generatoren herstellbar ist. Durch die Verwendung von Ozon wird die Vorschicht und jegliches verbleibendes Präkursor-Matorial, welches noch nicht reagiert hat, unmittelbar oxidiert, wobei die Barriereschicht gebildet wird. Gemäß dieser Ausführungsförm bleibt kein Präkursor-Material in dem Behälter zurück. Dies ist Insbesondere günstig In Fällen, wo eine Migration des Präkursor-Matertals in das Verpackungsgut vermieden werden soll, welches schließtich in den fertigen Behälter eingefüllt wird.

Die Verwendung von Ozon, welches bekanntlich ein wirksames und lebensmittelverträgliches Sterilisierungsmittel ist, hat außerdem den gewünschten Nebeneffekt, das Sterilitätsniveau innerhalb des Behälters zu erhöhen.

Das vorstehende Blasformverfahren mit der Vorschicht ist weiter vorteilhaft dadurch ausgestaltet, daß bei einer noch anderen Ausführungsform zur Erzeugung der Sperrschicht eine Teilverbrennung des Präkursor-Materials, vorzugsweise einer flüchtigen Silizlumverbindung, durch eine oxidierende Verbindung im Unterschuß in reduzierender Betriebsart/Reaktion erfolgt und daß danach ein weiteres sauerstoffhaltiges Gas in den Behälter eingeführt und mit mindestens einem entflammbaren Gas vermischt wird, das Gemisch zu einer endgültigen dritten Verbrennung gezündet wird, wobei das Gasgemisch einen Überschuß oxidierender Gase für die Verbrennung der Vorschicht hat und die Erzeugung der Sperrbeschichtung in oxidierender Betriebsart/-Reaktion erfolgt. Bei dieser Ausführungsform kann die Bildung der Vorschicht durch die erwähnte Teilverbrennung eines Präkursor-Materials erfolgen, zum Beispiel einer flüchtigen, vorzugsweise auch entflammbaren Siliziumverbindung, durch eine oxidierende Verbindung, wie zum Beispiel Sauerstoff oder Distickstoffoxid. Diese Verbrennung soll unter bestimmter Bedingung erfolgen, nämlich derjenigen, daß das Verhältnis der oxidierenden Verbindung zu dem Vorläufermaterial nicht für eine Gesamtoxidation des Vorläufermaterials ausreicht. Dies ist eine sauerstoffarme oder reduzierende Betriebsart/Reaktion. Nach dieser Teilverbrennung wird dann bei dieser Ausführungsform in einem nachfolgenden Schritt die Vorbeschichtung durch eine andere Verbrennung oder Explosion eines Gasgemisches in eine Sperrschicht überführt, wie im folgenden beschrieben wird, und zwar in oxidierender Betriebsart. Diese Verbrennung des Gasgemisches erfolgt wieder so, wie oben schon beschrieben wurde. Gezündet wird ein Gemisch aus mindestens einem oxidierenden Gas (zum Beispiel Sauerstoff oder Distickstoffoxid (N₂O)) und mindestens einem entflammbaren Gas (zum Beispiel Wasserstoff oder Ammoniak), vorzugsweise ein Knallgasgemisch. Dabei ist das Knallgasgemisch so aufgebaut, daß der Anteil an Sauerstoff im Überschuß reagiert, d.h. höher ist als für die gesamte Verbrennung der Vorschicht zur Sperrschicht erforderlich ist (Sperrschicht = zum Beispiel Siliziumoxid). Dies ist die oxidierende Betriebsart/Reaktion. Der Sauerstoffüberschuß wird für das Ausreagieren der Vorschlcht zur Sperrschicht benötigt.

Bei einer weiteren Ausführungsform wird die Teilverbrennung des Präkursor-Materials erfindungsgemäß mit der endgültigen dritten Verbrennung zur Sperrschicht zusammengefaßt, und diese Verbrennung beginnt in reduzierender Betriebsart/Reaktion und endet in oxidierender Betriebsart/Reaktion. Die beiden Verbrennungsschritte der zuvor beschriebenen Ausführungsform werden bei dieser zuletzt erwähnten Ausführungsform nicht voneinander getrennt. Es wird nur der Anteil der oxidierenden Verbindungen so variiert, daß das Verfahren reduzierend beginnt und oxidierend endet. Man hat festgestellt, daß diese Reaktionen schneller erfolgen und daß die Qualität der Sperrschicht überraschenderweise noch besser ist.

Eine weitere andere Ausführungsform des erfindungsgemäßen Blasformverfahrens mit der Vorschicht ist dadurch gekennzeichnet, daß direkt nach dem Endformen des Behälters, also nach dem Zünden des Knallgases oder ähnlichem in dem Behälter, gasförmige oder flüssige Vorläufermaterialien mit funktionellen Gruppen in das Behälterinnere eingefüllt werden, die in der Lage sind, mit den vom Verbrennungsprozeß hinterlassenen Radikalstellen zu reagieren. Funktionelle Gruppen in diesem Sinne sind zum Beispiel Vinylgruppen. Die Bildung der Radikalstellen wird begünstigt durch Unterschuß an Sauerstoff (reduzierende Betriebsart) und/oder durch Zugabe von Stickstoff zu dem brennbaren Gasgemisch.

Bevorzugt ist auch eine Ausführungsform des Verfahrens, bei welcher Stickstoff dem entflammbaren Gasgemisch zugegeben wird, um eine gut haftende Beschichtung auf der inneren Oberfläche des Vorformlings zu bilden.

Diese Radikalstellen werden besonders günstig durch die Zugabe von Stickstoff zu dem brennbaren Gasgemisch gebildet. Das Präkursor-Material, welches unmittelbar nach der Verbrennung (Explosion) zugeführt wird, reagiert unmittelbar mit diesen Radikalstellen. Dadurch wird eine aufgepfropfte und sehr gut haftende dünne Schicht auf der inneren Oberfläche des Formlings gebildet.

Es ist ferner zweckmäßig, wenn erfindungsgemäß das sauerstoffhaltige Gasgemisch unter Einwirkung von UV-Strahlung einer Lampe, vorzugsweise einer Exzimer-Lampe mit der Vorschicht zur Bildung der Sperrschicht reagiert. Es gibt solche UV-Lampen mit einer Strahlung mit einem hohen Anteil kurzer Wellenlängen. Besonders günstig ist eine Exzimer-Lampe. Diese kann nach dem Einbringen der Vorschicht in den Behälter eingeführt werden.

Besonders günstig ist es dabei, wenn man eine Explosion bzw. Verbrennung zur Erzeugung der UV-Strahlung verwendet. Die UV-Strahlung gibt die notwendige Energie für die Umwandlung des abgeschiedenen Vorläufermaterials zu der gewünschten Sperrschicht. Verwendet man die Verbrennung zur Erzeugung der UV-Strahlung, dann braucht man mit weiterem Vorteil nicht eine sperrige UV-Lampe oder dergleichen in den Behälter einzuführen. Es hat sich auch als günstig herausgestellt, die UV-Strahlungserzeugung von außen zu vermeiden, weil dadurch das Behältermaterial nicht so leicht beschädigt wird.

Günstig kann es in diesem Zusammenhang sein, wenn erfindungsgemäß dem sauerstoffhaltigen, entflammbaren Gasgemisch Stickstoff oder Xenon zugemischt wird, weiches dann für die zweite Verbrennung gezündet wird und UV-Strahlung emittiert. Man kann auf diese Weise die UV-Strahlung durch die Verbrennung (Explosion) selbst erzeugen. Dies kann beispielsweise über die Bildung von angeregten Verbindungen ("Exzimeren") geschehen. Diese Exzimere zerfallen dann unter Emission von UV-Strahlung.

Die Exzimer-Strahlung kann bemerkenswert hohe Quantenenergien haben. Deshalb ist die Verwendung von Xenon gemäß der vorstehenden Ausführungsform günstig. Xenon hat den Vorteil, daß es Exzimere in homogener Phase bilden kann ohne die Notwendigkeit, eine zweite Gaskomponente einzuführen. Das erregte Xenon (Xe₂*)-Exzimer hat einen Strahlungszerfall mit einer Emissionswellenlänge von 172 nm (Quantenenergie: 7,2 eV). Durch Xenon kann auch die Oberfläche sterilisiert werden. Da Xenon ein Edelgas ist und somit nicht an die fertig bearbeitete Sperrschicht gebunden ist, kann man mit weiterem Vorteil Xenon, welches den Verbrennungsstoffen zugemischt worden war, dann mit Standardmethoden nach dem Beschichtungsprozeß wieder aufbereiten.

Es kann erfindungsgemäß auch vorgesehen werden, ein Präkursor-Material auf Basis einer Silizium-, Magnesium-, Aluminium-, Titan-, Zirkonium-, Zink-, Bor-, Cer-, Kalzium- oder Zinnverbindungen oder dergleichen in Form einer Flüssigkeit oder eines duktilen Feststoffes als Vorschicht auf die innere Oberfläche des Vorformlings vor der Vorformung des Behälters mit Niederdruck aufzubringen, wobei nach dem Vorformen sauerstoffhaltiges, entflammbares Gasgemisch in den Vorformling eingeführt und gezündet wird, wodurch der Vorformling durch den bei der Verbrennung entstehenden höheren Blasdruck in seine endgültige Gestalt geformt wird und gleichzeitig die Beschichtung auf der Basis von Siliziumoxid, Siliziumoxynitrid, Magnesiumoxid, Aluminiumoxid, Titanoxid, Titannitrid, Zinkoxid, Zirkoniumoxid, Boroxid, Ceroxid, Kalziumoxid oder Zinnoxid oder dergleichen oder auf der Basis von Gemischen hieraus auf der inneren Oberfläche des Behälters gebildet wird. Das Aufbringen der Vorschicht auf die innere Oberfläche des Vorformlings kann sowohl innerhalb (wie oben beschrieben) als auch außerhalb der Blasformmaschine geschehen. Zum Auftragen außerhalb der Blasformmaschine wird beispielsweise ein Coinjektionsprozeß verwendet.

Siliziumverbindungen oder andere geeignete Verbindungen (Vorläufermaterialien) mit einem niedrigen Dampfdruck werden vor dem Endformen in den Vor- oder Zwischenformling eingeführt, wobei dies vorzugsweise in einem Temperaturbereich der Innenwand zwischen 80°C und 120°C erfolgt; oder sie werden nach dem Endformen in den endgeformten Behälter (Endformling) eingeführt, wobei dies vorzugsweise in einem Temperaturbereich der Innenwand zwischen 20°C und 40°C erfolgt. Auf den inneren Oberflächen des Behälters bildet sich damit die Vorschicht.

Alle die erfindungsgemäßen Verfahren mit der Vorschicht haben außerdem die weiteren folgenden Vorteile: Weil die Vorschicht zu der Sperrschicht von der Oberfläche ausgehend in die Tiefe der Wandung hinein umgewandelt wird, hat die Vorschicht in den meisten Fällen einen Dichte- und Starrheitsgradienten in Richtung senkrecht zur Behälterwand. Die Sperrschicht ist nahe der Grenzfläche zu dem Kunststoff, aus welchem der Behälter hergestellt wird, vergleichsweise weich und offen zur Diffusion. Andererseits ist die Sperrschicht nahe ihrer Oberfläche, welche zur Innenseite des Behälters gerichtet ist, starr und dicht. Dies ist sehr günstig bezüglich des Widerstandes der Sperrbeschichtung gegen Platzen, was sonst durch Biegen, Strecken, Stöße oder Temperaturveränderungen hervorgerufen werden könnte.

Mit weiterem Vorteil ist die Oxidation und damit die Verdichtung der gegebenen Vorschicht der letzte Schritt in der Folge von Explosions- und/oder Verbrennungsprozessen. Hierdurch kann erreicht werden, daß die oxidierte, starre Schicht nicht überbeansprucht wird, weil nahezu das gesamte Blasen in die Endgestalt durch vorhergehende Explosions- und/oder Verbrennungsprozesse abgeschlossen ist. Der Vorteil ist eine bemerkenswert reduzierte Neigung zum Reißen der Sperrschicht.

Es sind eingangs bereits bekannte Verfahren beschrieben worden, wie ein Behälter ausgeformt werden kann. Außer dem Explosions-Streckblasformen ist auch das klassische Streckblasformen mit den zwei Druckstufen beschrieben worden, nämlich dem Vorformen mit Niederdruck und dem Endformen bei höherem Blasdruck zwischen 20 bar und 600 bar. Nach der Erfindung kann nach diesem Endformen, dem klassischen Streckblasformen, ein Vorläufergas in den Behälter eingeführt und zur Bildung der Beschichtung gezündet werden.

Bei diesem klassischen Verfahren zum Blasformen eines Behälters aus einem Vorformling aus Kunststoff, der nach Erwärmen durch ein mit Niederdruck von zwischen 2 bar und 15 bar in den Behälter eingeblasenes Gas unter Vergrößerung seines Innenvolumens vorgeformt und danach durch Einblasen eines weiteren Gases mit höherem Blasdruck von zwischen 20 bar und 600 bar in den Behälter in seine endgültige Gestalt ausgeformt wird, wird zur Lösung der Aufgabe, eine Beschichtung auf der inneren Oberfläche des Behälters vorzusehen, erfindungsgemäß gelehrt, daß ein brennfähiges Präkursor-Gas in den entspannten, ausgeformten Behälter eingeblasen und gezündet wird und durch die Verbrennung eine Beschichtung auf der inneren Oberfläche des Behälters gebildet wird. Vorzugsweise wird beim klassischen Verfahren das weitere Gas mit einem Blasdruck von etwa 40 bar in den Behälter eingeblasen, so daß dieser seine endgültige Gestalt erhält. Erfindungsgemäß wird dieses eingeblasene Gas dann durch den Entspannungsvorgang bis etwa Normaldruck herausgelassen, und danach wird das brennfähige Präkursor-Gas eingeblasen. Wie bei den eingangs erwähnten Vorteilen ergibt sich durch die Verbrennung des Präkursor-Gases die Beschichtung, zum Beispiel eine Beschichtung auf Siliziumoxidbasis oder auf organischer Kohlenstoffbasis. Der Verbrennungsschritt erlaubt wiederum nicht nur eine billige Beschichtung ohne großen Maschinenaufwand, sondern erzeugt gewünschtenfalls auch eine aseptische Verpackung, wobei der Behälter unmittelbar nach seiner Herstellung aseptisch ist.

Vorteilhaft ist es dabei, wenn bei weiterer Ausgestaltung das Präkursor-Gas auf Silizium-, Magnesium-, Aluminium-, Titan-, Zink-, Zirkonium-, Bor-, Cer-, Kalzium- oder Zinnoxidbasis oder dergleichen oder auf der Basis von Gemischen hieraus gebildet wird und wenn sich eine Beschichtung auf Siliziumoxid-, Siliziumoxynitrid-, Magnesiumoxid-, Aluminiumoxid-, Titanoxid-, Titannitrid-, Zinkoxid-, Zirkoniumoxid, Boroxid-, Ceroxid- Kalziumoxid oder Zinnoxidbasis oder dergleichen oder auf der Basis von Gemischen hieraus ergibt. Günstig ist es auch, wenn das Präkursor-Gas aus mindestens einer flüchtigen Kohlenwasserstoffverbindung auf Basis von Alkanen oder Alkenen, Alkinen, Aromaten, Alkanolen, Ethern, Aldehyden, Ketonen, Epoxiden, organischen Säuren, Estern oder entsprechenden Anhydriden besteht.

Die Merkmale und Vorteile, die mit dem neuen Beschichtungsverfahren in Verbindung mit dem eingangs beschriebenen Explosions-Streckblasformen erreicht werden, ergeben sich auch für das klassische Blasformverfahren. Zum Beispiel kann das Präkursor-Gas aus einem Gemisch aus mindestens einer flüchtigen Metallverbindung und mindestens einer flüchtigen Kohlenwasserstoffverbindung bestehen. Das Präkursor-Material kann auch in Form eines Gases, Dampfes oder Nebels als Vorschicht auf die innere Oberfläche eines Formlings aufgebracht werden, wonach ein sauerstoffhaltiges, entflammbares Gasgemisch in den Formling eingeführt und gezündet wird und sich die gewünschte Beschichtung ergibt. Eine gesonderte Wiederholung aller Merkmale und Vorteile erscheint hier nicht erforderlich. Vielmehr wird auf die oben stehenden Ausführungen Bezug genommen, die auch in Verbindung mit dem klassischen Streckblasformen gelten.

Weitere Vorteile, Merkmale und Anwendungsmöglichkeiten der vorliegenden Erfindung ergeben sich aus der folgenden Beschreibung bevorzugter Ausführungsformen in Verbindung mit den anliegenden Zeichnungen. Von diesen zeigen:
- Figur 1: schematisch drei verschiedene Betriebszustände des Blasverfahrens mit dem Vorformling links, dem gerade aufgeblasenen Formling in der Mitte und dem fertig abgeführten Behälter rechts, wobei der Vorformling bzw. der Behälter jeweils in einer Aufnahme sitzt,
- Figur 2: ein Diagramm des Druckverlautes über die Zeit bei einer ersten Ausführungsform,
- Figur 3: der gleiche Druckverlauf bei einer zweiten Ausführungsform,
- Figur 4: eine ähnliche Ansicht wie Figur 1, jedoch bei einer weiteren anderen Ausführungsform und
- Figur 5: eine ähnliche Ansicht wie Figur 1, wobei jedoch dargestellt sein soll, wie der links von der Aufnahme gehaltene Vorformling mit der Vorschicht versehen und danach das andere Verfahren durchgeführt wird.

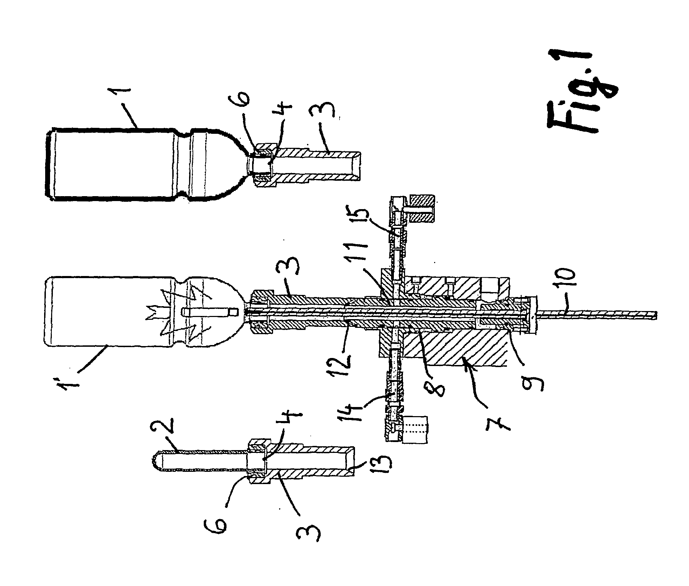

Während der endgeformte Behälter 1 als PET-Flasche mit den üblichen Abmaßen dargestellt ist, ist der Vorformling jeweils in der linken Position gezeigt und mit 2 bezeichnet. Dieser Vorformling 2 wird ebenso wie der Zwischenformling 1' und die fertigen Behälter 1 von einer Aufnahme 3 gehalten. Von der gesamten Herstellungseinheit sind nur die für die Erfindung wichtigen Teile gezeigt, während an sich bekannte und für die Erfindung unwichtige Teile des Werkzeuges weggelassen sind, so zum Beispiel die Blasform, der Forminnenraum, welcher dem fertigen Behälter 1 entspricht und andere übliche Maschinenteile. Es fehlen in den Darstellungen daher auch die Halterungen und Schienen für den Transport der Werkstücke, die in den Figuren 1, 4 und 5 von links nach rechts nacheinander bearbeitet werden.

Am oberen Ende der Aufnahme 3 wird ein Serviceraum 4 gebildet, in welchem eine Zentrierung 6 eingesetzt ist. Der herzustellende Behälter 1 in Form einer PET-Flasche ist mit seinem offenen Ende kopfüber nach unten in der Zentrierung 6 abgestützt und dichtend in der Aufnahme 3 gehalten.

Ein mit 7 bezeichneter Verteilerblock befindet sich ortsfest an der Maschine und hat eine durchgehende vertikale Bohrung 8. In dieser sitzt unten eine dichtende Durchführung 9, durch weiche ein Streckstempel 10 konzentrisch und dichtend geführt und in dem Verteilerblock 7 oszillierend nach unten und oben bewegbar ist. In geringem Abstand über der dichtenden Durchführung 9 im Inneren des Verteilerblockes 7 befindet sich ein Hohlkolben 11, der relativ zu dem ortsfesten Verteilerblock 7 axial in der erwähnten Bohrung 8 und damit parallel zu der mittigen Längsachse bewegbar angetrieben ist. Der Streckstempel 10 verläuft im wesentlichen in dieser Längsmittelachse. Der bewegliche Streckstempel 10 ist axial in Flucht mit der Aufnahme 3 in letztere und auch in den von dieser gehaltenen Vorformling 2, Zwischenformling 1' oder Behälter 1 eindringend angeordnet.

Der Hohlkolben 11 hat an seinem oberen, nämlich dem äußeren Ende, welches der Aufnahme 3 zugewandt ist, eine zu letzterer passende, ringförmige Gegendichtfläche 12. Die hohle Aufnahme 3 weist an ihrem dem Behälter 1 bzw. dem Vorformling 2 abgewandten Ende (unten) eine ringförmige Dichtfläche 13 auf. Diese paßt zu der Gegendichtfläche 12 des Hohlkolbens 11 in solcher Weise, daß bei einer Bewegung des Hohlkolbens 11 nach unten die Aufnahme 3 von dem ganzen unteren Anschlußgebilde frei wird und horizontal seitlich verschoben werden kann. Gase, wie zum Beispiel Sauerstoff und Wasserstoff, können seitlich durch Leitungen 14 und 15 durch den Hohlkolben 11 und die Aufnahme 3 nach oben in den Innenraum des Vorformlings 2, Zwischenformlings 1' oder des Behälters 1 geführt werden.

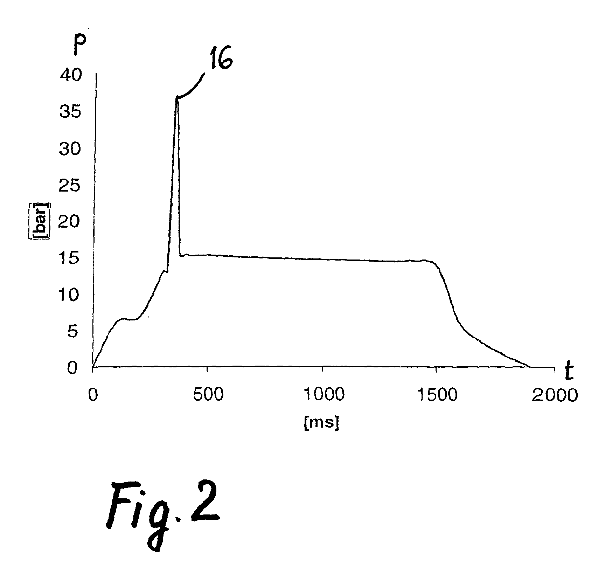

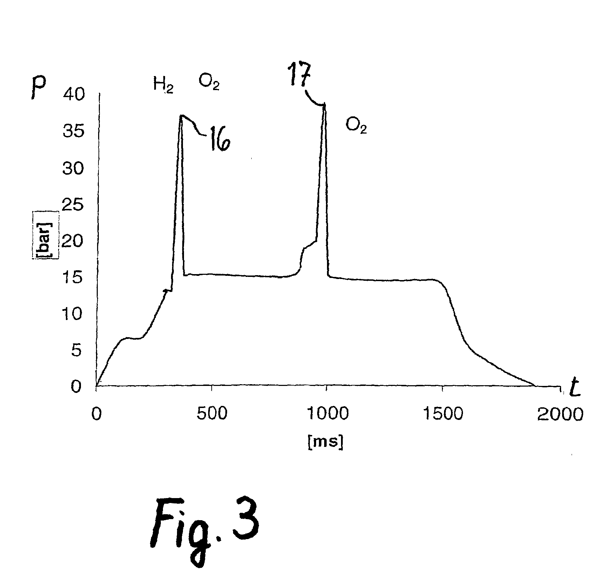

Das Verfahren mit dem Zünden des explosiven Gemisches läßt sich gut anhand der Figuren 2 und 3 erklären, welche jeweils ein Druckdiagramm darstellen. In beiden ist über der Zeit t (in Millisekunden) der Druck p (in bar) im Inneren des Formlings 1, 1', 2 aufgetragen.

Der jeweils fertige Behälter 1 mit der Aufnahme 3, d.h. die rechte Station in Figur 1, sind horizontal nach rechts fortbewegt zu denken. Es wird zunächst die Aufnahme 3 mit dem Vorformling 2 aus der linken Position in die Mitte auf den Hohlkolben 11 aufgesetzt und über die Dichtungen 12 und 13 dichtend mit dem Verteilerblock 7 verbunden.

Nun wird zur Zeit t = 0 bei dem Verfahren nach Figur 2 ein brennfähiges Gas mit einem Präkursor-Gas, zum Beispiel TMS (Tetramethylsilan), zum Vergrößern des Innenvolumens des Vorformlings 2 auf einen Druck von etwa 12 bar gebracht und nach etwa 300 ms gezündet. Es entsteht ein kurzzeitiger Druckanstieg auf etwa 37 bar. Bei dieser Druckspitze 16 ist die Endformung erreicht, und auf der inneren Oberfläche des Behälters ist durch Reaktion des Präkursor-Gases TMS mit Sauerstoff eine Beschichtung gebildet, die aus Siliziumoxid besteht. Zum Abkühlen des frisch geblasenen Behälters 1 wird ein Druck von etwa 15 bar bis zur Zeit t = 1500 ms aufrechterhalten. Dann wird entlüftet, und der Behälter 1 gelangt in die in Figur 1 rechte Position, in welcher das Innere des Behälters auf Atmosphärendruck entlüftet werden kann.

Bei einem anderen Verfahren gemäß dem Druckdiagramm der Figur 3 erfolgt die Vorformung unter Druckerhöhung eines Knallgases bis zur Zündung desselben wie bei der Ausführungsform der Figur 2. Die Endformung ist wieder bei der Druckspitze 16 erreicht. Im Unterschied zur Figur 2 erfolgte die Endformung hier jedoch nur durch ein brennfähiges Gas, zum Beispiel Knallgas. Zur Zeit t = 1000 ms wird nun ein brennfähiges Gas, zum Beispiel Wasserstoff und Sauerstoff zusammen mit einem Präkursor-Gas, zum Beispiel TMS, durch Zünden zur Explosion gebracht. Durch diese Explosion entsteht eine zweite Druckspitze 17, bei welcher das beschichtungsfähige Medium oxidiert und zur Bildung der gewünschten Endbeschichtung der Innenwand des Behälters ausreagiert wird. Danach erfolgt wieder eine Abkühlzeit bis t = 1500 ms. Danach wird das Behälterinnere entspannt und gegebenenfalls entlüftet.

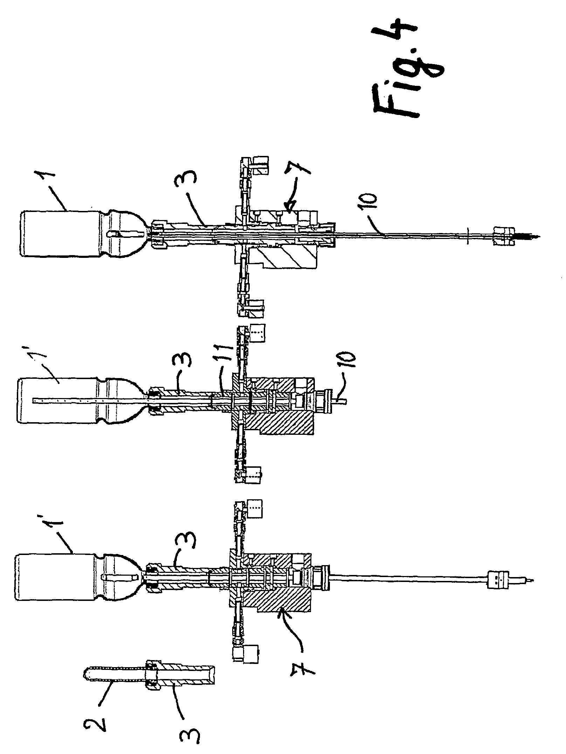

Figur 4 zeigt oben vier verschledene Positionen. In der am weitesten links gelegenen Position befindet sich noch der Vorformling 2 auf der Aufnahme 3. Der Vorformling wird in die zweite Position nach rechts über den Verteilerblock 7 gefahren und dort dichtend angeschlossen. Es erfolgt hier die Einleitung und Zündung von Knallgas zur Endformung des noch nicht beschichteten Endformlings 1'. Nach diesem Schritt erfolgt die Aufbringung der Vorschicht gemäß der dritten Position in Figur 4 von links. Nach dem Endformen wird ein Präkursor-Material auf Siliziumbasis bei einer Atmosphäre Normaldruck flüssig auf die Innenwandung des endgeformten Zwischenformlings 1' aufgespritzt, oder es wird aufkondensiert. Diese dritte Position in Figur 4 zeigt das auf der Innenwand des Zwischenformlings 1' bereits aufgebrachte, weiche Vormaterial, die weiche Vorschicht.

Sodann wird gemäß der vierten, am weitesten rechts in Figur 4 gelegenen Position ein sauerstoffhaltiges, entflammbares Gasgemisch, zum Beispiel Knallgas, eingeführt und zu einer letzten Verbrennung gezündet. Diese Verbrennung bewirkt das Ausreagieren der Vorschicht in die gewünschte Beschichtung auf ― in diesem speziellen Falle ― Siliziumoxidbasis.

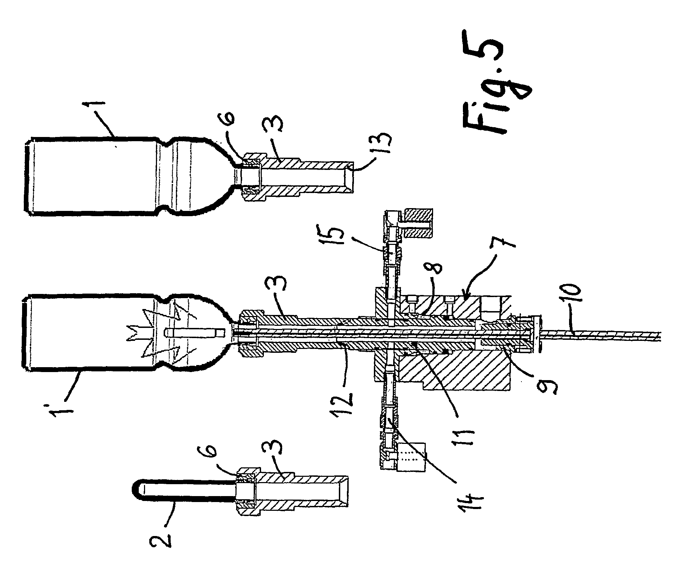

Figur 5 zeigt einen ähnlichen Aufbau wie Figur 1. Der Unterschied besteht hier aber darin, daß durch Kondensieren oder Aufpolymerisieren eine Vorschicht auf die innere Oberfläche des Vorformlings 2 aufgebracht worden ist. Dann erst erfolgt die Vorformung mit Niederdruck und dann schließlich die endgültige Verbrennung zur Endformung und zum Ausreagieren der Vorschicht zu der gewünschten Beschichtung auf der Basis von ― in diesem speziellen Falle ― Siliziumoxid.

### Bezugszeichenliste:

- 1: Behälter
- 1': Zwischenformling
- 2: Vorformling
- 3: Aufnahme
- 4: Serviceraum
- 6: Zentrierung
- 7: Verteilerblock
- 8: vertikale Bohrung
- 9: dichtende Durchführung
- 10: Streckstempel
- 11: Hohlkolben
- 12: Gegendichtfläche
- 13: ringförmige Dichtfläche
- 14: Gasleitung
- 15: Gasleitung
- 16: Druckspitze
- 17: Druckspitze

## Patentansprüche

1. Verfahren zum Blasformen eines Behälters (1) aus einem Vorformling (2) aus Kunststoff, der nach Erwärmen durch ein mit Niederdruck von zwischen 2 bar und 15 bar in den Behälter (1, 2) eingeblasenes Gas unter Vergrößerung seines Innenvolumens vorgeformt wird und durch Zünden eines eingeblasenen, brennfähigen Gases durch den bei der Verbrennung entstehenden höheren Blasdruck in seine endgültige Gestalt geformt wird, **dadurch gekennzeichnet, daß** dem brennfähigen Gas ein Präkursor-Gas zugemischt wird, dieses Gemisch gezündet wird und durch die Verbrennung eine Sperr- oder Barrierebeschichtung auf der inneren Oberfläche des Behälters (1) gebildet wird.

2. Verfahren nach Anspruch 1, wobei das Präkursor-Gas auf Silizium-, Magnesium-, Aluminium-, Titan-, Zink-, Zirkonium-, Bor-, Cer-, Kalzium- oder Zinnbasis oder dergleichen oder auf der Basis von Gemischen hieraus gebildet wird und daß sich eine Sperr- oder Barrierebeschichtung auf Siliziumoxid-, Siliziumoxynitrid-, Magnesiumoxid-, Aluminiumoxid-, Titanoxid-, Titannitrid-, Zinkoxid-, Zirkoniumoxid-, Boroxid-, Ceroxid-, Kalziumoxid oder Zinnoxidbasis oder dergleichen oder auf der Basis von Gemischen hieraus ergibt.

3. Verfahren nach Anspruch 1, wobei das Präkursor-Gas aus mindestens einer flüchtigen Kohlenwasserstoffverbindung auf Basis von Alkanen oder Alkenen, Alkinen, Aromaten, Alkanolen, Ethern, Aldehyden, Ketonen, Epoxiden, organischen Säuren, Estern oder entsprechenden Anhydriden besteht.

4. Verfahren nach Anspruch 1, wobei das Präkursor-Gas aus einem Gemisch aus mindestens einer flüchtigen Metallverbindung und mindestens einer flüchtigen Kohlenwasserstoffverbindung besteht.

5. Verfahren nach einem der Ansprüche 1 bis 4, wobei das Zumischen des Präkursor-Gases vor dem Vorformen erfolgt und die Sperr- oder Barrierebeschichtung beim Endformen gebildet wird.

6. Verfahren nach einem der Ansprüche 1 bis 4, wobei das Präkursor-Gas nach dem Endformen in den Behälter (1) eingeführt wird und durch das Zünden eine zweite Verbrennung zur Bildung der Sperr- oder Barrierebeschichtung auf der inneren Oberfläche des Behälters (1) ausgelöst wird.

7. Verfahren zum Blasformen eines Behälters (1) aus einem Vorformling (2) aus Kunststoff, der nach Erwärmen durch ein mit Niederdruck von zwischen 2 bar und 15 bar in den Behälter (1, 2) eingeblasenes Gas unter Vergrößerung seines Innenvolumens vorgeformt wird und durch Zünden eines eingeblasenen, brennfähigen Gases durch den bei der Verbrennung entstehenden höheren Blasdruck in seine endgültige Gestalt geformt wird, **dadurch gekennzeichnet, daß** ein Präkursor-Material auf Basis einer Silizium-, Magnesium-, Aluminium-, Titan-, Zink-, Zirkonium-, Bor-, Cer-, Kalzium- oder Zinnverbindung oder dergleichen oder auf der Basis von Gemischen hieraus in Form eines Gases, Dampfes oder Nebels als Vorschicht auf die innere Oberfläche eines Formlings (1, 1') aufgebracht wird, dann ein sauerstoffhaltiges, entflammbares Gasgemisch in den Formling (1, 1') eingeführt und gezündet wird und durch diese Verbrennung die Sperr- oder Barrierebeschichtung auf Siliziumoxid-, Siliziumoxynitrid-, Magnesiumoxid-, Aluminiumoxid-, Titanoxid-, Titannitrid-, Zinkoxid-, Zirkoniumoxid-, Boroxid-, Ceroxid-, Kalziumoxid- oder Zinnoxidbasis oder auf der Basis von Gemischen hieraus auf der inneren Oberfläche des Behälters gebildet wird.

8. Verfahren zum Blasformen eines Behälters (1) aus einem Vorformling (2) aus Kunststoff, der nach Erwärmen durch ein mit Niederdruck von zwischen 2 bar und 15 bar in den Behälter (1, 2) eingeblasenes Gas unter Vergrößerung seines Innenvolumens vorgeformt wird und durch Zünden eines eingeblasenen, brennfähigen Gases durch den bei der Verbrennung entstehenden höheren Blasdruck in seine endgültige Gestalt geformt wird, **dadurch gekennzeichnet, daß** ein Präkursor-Material, das aus mindestens einer flüchtigen Kohlenwasserstoffverbindung auf Basis von Alkanen, Alkenen, Alkinen oder Aromaten, Alkanolen, Ethern, Aldehyden, Ketonen, Epoxiden, organischen Säuren, Estern oder entsprechenden Anhydriden besteht, in Form eines Gases, Dampfes oder Nebels als Vorschicht auf die innere Oberfläche eines Formlings (1, 1') aufgebracht wird, dann ein sauerstoffhaltiges, entflammbares Gasgemisch in den Formling (1, 1') eingeführt und gezündet wird und durch diese Verbrennung eine Sperr- oder Barrierebeschichtung auf Kohlenstoffbasis auf der inneren Oberfläche des Behälters gebildet wird.

9. Verfahren nach Anspruch 7, wobei das sauerstoffhaltige, für die zweite Verbrennung entflammbare Gasgemisch Ozon enthält.

10. Verfahren nach Anspruch 7, wobei eine Teilverbrennung des Präkursor-Materials, vorzugsweise einer flüchtigen Siliziumverbindung, durch eine oxidierende Verbindung im Unterschuß zur Oxidation des Präkursor-Materials in reduzierender Betriebsart/Reaktion erfolgt und daß danach ein weiteres sauerstoffhaltiges Gas in den Behälter (1) eingeführt und mit mindestens einem entflammbaren Gas vermischt wird, das Gemisch zu einer endgültigen dritten Verbrennung gezündet wird, wobei das Gasgemisch einen Überschuß oxidierender Gase für die Verbrennung der Vorschicht hat und die Erzeugung der Innenbeschichtung in oxidierender Betriebsart/Reaktion erfolgt.

11. Verfahren nach Anspruch 7 oder 10, wobei die Teilverbrennung des Präkursor-Materials zur Vorschicht mit der endgültigen dritten Verbrennung zur Sperrschicht zusammengefaßt wird und diese Verbrennung in reduzierender Betriebsart/Reaktion beginnt und in oxidierender Betriebsart/Reaktion endet.

12. Verfahren nach Anspruch 7 oder 8, wobei direkt nach dem Endformen des Behälters (1), also nach dem Zünden des Knallgases oder ähnlichem in dem Behälter (1), gasförmige oder flüssige Vorläufermaterialien mit funktionellen Gruppen in das Behälterinnere eingeführt werden, die in der Lage sind, mit den vom Verbrennungsprozeß hinterlassenen Radikalstellen zu reagieren.

13. Verfahren nach Anspruch 12, wobei Stickstoff dem entflammbaren Gasgemisch zugegeben wird, um eine gut haftende Sperr- oder Barrierebeschichtung auf der inneren Oberfläche des Vorformlings zu bilden.

14. Verfahren nach Anspruch 7 oder 8, wobei das sauerstoffhaltige Gasgemisch unter Einwirkung von UV-Strahlung einer Lampe, vorzugsweise einer Exzimer-Lampe, mit der Vorschicht zur Bildung der Sperrschicht reagiert.

15. Verfahren nach Anspruch 7 oder 8, wobei dem sauerstoffhaltigen, entflammbaren Gasgemisch Stickstoff oder Xenon zugemischt wird, welches dann für die zweite Verbrennung gezündet wird und UV-Strahlung emittiert.

16. Verfahren zum Blasformen eines Behälters (1) aus einem Vorformling (2) aus Kunststoff, der nach Erwärmen durch ein mit Niederdruck von zwischen 2 bar und 15 bar in den Behälter (1, 2) eingeblasenes Gas unter Vergrößerung seines Innenvolumens vorgeformt wird und durch Zünden eines eingeblasenen, brennfähigen Gases durch den bei der Verbrennung entstehenden höheren Blasdruck in seine endgültige Gestalt geformt wird, **dadurch gekennzeichnet, daß** ein Präkursor-Material auf Basis einer Silizium-, Magnesium-, Aluminium-, Titan-, Zink-, Zirkonium-, Bor-, Cer-, Kalzium- oder Zinnverbindung oder dergleichen oder auf der Basis von Gemischen hieraus in Form eines Gases, Dampfes, Nebels oder eines duktilen Feststoffes als Vorschicht auf die innere Oberfläche des Vorformlings (2) vor der Vorformung des Behälters (1) mit Niederdruck aufgebracht wird, dann sauerstoffhaltiges, entflammbares Gasgemisch in den Vorformling (2) eingeführt und gezündet wird, wodurch der Formling (2) durch den bei der Verbrennung entstehenden höheren Blasdruck in seine endgültige Gestalt geformt wird und gleichzeitig die Sperr- oder Barrierebeschichtung auf der Basis von Siliziumoxid, Siliziumoxynitrid, Magnesiumoxid, Aluminiumoxid, Titanoxid, Titannitrid, Zinkoxid, Zirkoniumoxid, Boroxid, Ceroxid, Kalziumoxid oder Zinnoxid oder auf der Basis von Gemischen hieraus auf der inneren Oberfläche des Behälters gebildet wird.

17. Verfahren zum Blasformen eines Behälters (1) aus einem Vorformling (2) aus Kunststoff, der nach Erwärmen durch ein mit Niederdruck von zwischen 2 bar und 15 in den Behälter (1, 2) eingeblasenes Gas unter Vergrößerung seines Innenvolumens vorgeformt und danach durch Einblasen eines weiteren Gases mit höherem Blasdruck von zwischen 20 bar und 600 bar in den Behälter in seine endgültige Gestalt ausgeformt wird, **dadurch gekennzeichnet, daß** ein brennfähiges Präkursor-Gas in den entspannten, ausgeformten Behälter (1) eingeblasen und gezündet wird und durch die Verbrennung eine Sperr- oder Barrierebeschichtung auf der inneren Oberfläche des Behälters (1) gebildet wird.

18. Verfahren nach Anspruch 17, wobei das Präkursor-Gas auf Silizium-, Magnesium-, Aluminium-, Titan-, Zink-, Zirkonium-, Bor-, Cer-, Kalzium- oder Zinnoxidbasis oder dergleichen oder auf der Basis von Gemischen hieraus gebildet wird und daß sich eine Sperr- oder Barrierebeschichtung auf Siliziumoxid-, Siliziumoxynitrid-, Magnesiumoxid-, Aluminiumoxid-, Titanoxid-, Titannitrid-, Zinkoxid-, Zirkoniumoxid-, Boroxid-, Ceroxid-, Kalziumoxid oder Zinnoxidbasis oder dergleichen oder auf der Basis von Gemischen hieraus ergibt.

19. Verfahren nach Anspruch 17, wobei das Präkursor-Gas aus mindestens einer flüchtigen Kohlenwasserstoffverbindung auf Basis von Alkanen oder Alkenen, Alkinen, Aromaten, Alkanolen, Ethern, Aldehyden, Ketonen, Epoxiden, organischen Säuren, Estern oder entsprechenden Anhydriden besteht.

## Claims

1. Process for blow moulding a vessel (1) from a plastic preform (2) which, after heating, is pre-formed by a gas which is blown into the vessel (1, 2) at low pressure of between 2 bar and 15 bar with an accompanying increase in its internal volume and is shaped into its definitive form by ignition of a blown-in, combustible gas by the higher blowing pressure arising during the combustion, **characterized in that** a precursor gas is added to the combustible gas, this mixture is ignited and through the combustion a blocking or barrier coating is formed on the inner surface of the vessel (1).

2. Process according to claim 1, the precursor gas being formed on the basis of silicon, magnesium, aluminium, titanium, zinc, zirconium, boron, cerium, calcium or tin or the like or on the basis of mixtures thereof and a blocking or barrier coating resulting on the basis of silicon oxide, silicon oxynitride, magnesium oxide, aluminium oxide, titanium oxide, titanium nitride, zinc oxide, zirconium oxide, boron oxide, cerium oxide, calcium oxide or tin oxide or the like or on the basis of mixtures thereof.

3. Process according to claim 1, the precursor gas consisting of at least a volatile hydrocarbon compound based on alkanes or alkenes, alkines, aromatics, alkanols, ethers, aldehydes, ketones, epoxides, organic acids, esters or corresponding anhydrides.

4. Process according to claim 1, the precursor gas consisting of a mixture of at least one volatile metal compound and at least one volatile hydrocarbon compound.

5. Process according to one of claims 1 to 4, the admixing of the precursor gas taking place before the pre-forming and the blocking or barrier coating being formed during the final forming.

6. Process according to one of claims 1 to 4, the precursor gas being introduced into the vessel (1) after the final forming and through the ignition a second combustion being triggered on the inner surface of the vessel (1) for the formation of the blocking or barrier coating.

7. Process for blow moulding a vessel (1) from a plastic preform (2) which, after heating, is pre-formed by a gas which is blown into the vessel (1, 2) at low pressure of between 2 bar and 15 bar with an accompanying increase in its internal volume and is shaped into its definitive form by ignition of a blown-in, combustible gas by the higher blowing pressure arising during the combustion, **characterized in that** a precursor material on the basis of a silicon, magnesium, aluminium, titanium, zinc, zirconium, boron, cerium, calcium or tin compound or the like or on the basis of mixtures thereof is applied to the inner surface of a moulded article (1,1') as prelayer in the form of a gas, vapour or mist, then an oxygen-containing, flammable gas mixture is introduced into the moulded article (1, 1') and ignited and through this combustion, the blocking or barrier coating on the basis of silicon oxide, silicon oxynitride, magnesium oxide, aluminium oxide, titanium oxide, titanium nitride, zinc oxide, zirconium oxide, boron oxide, cerium oxide, calcium oxide or tin oxide or on the basis of mixtures thereof is formed on the inner surface of the vessel.

8. Process for blow moulding a vessel (1) from a plastic preform (2) which, after heating, is pre-formed by a gas which is blown into the vessel (1, 2) at low pressure of between 2 bar and 15 bar with an accompanying increase in its internal volume and is shaped into its definitive form by ignition of a blown-in, combustible gas by the higher blowing pressure arising during the combustion, **characterized in that** a precursor material which consists of at least one volatile hydrocarbon compound on the basis of alkanes, alkenes, alkines or aromatics, alkanols, ethers, aldehydes, ketones, epoxides, organic acids, esters or corresponding anhydrides, is applied in the form of a gas, vapour or mist as prelayer to the inner surface of a moulded article (1, 1'), an oxygen-containing, flammable gas mixture is then introduced into the moulded article (1, 1') and ignited and, through this combustion, a carbon-based blocking or barrier coating is formed on the inner surface of the vessel.

9. Process according to claim 7, the oxygen-containing gas mixture flammable for the second combustion containing ozone.

10. Process according to claim 7, there being a partial combustion of the precursor material, preferably a volatile silicon compound, through an oxidizing compound in deficit to oxidize the precursor material in reductive operating mode/reaction and thereafter a further oxygen-containing gas being introduced into the vessel (1) and mixed with at least one flammable gas, the mixture being ignited to produce a definitive third combustion, the gas mixture having an excess of oxidizing gases for the combustion of the prelayer and the creation of the internal coating taking place in oxidizing operating mode/reaction.

11. Process according to claim 7 or 10, the partial combustion of the precursor material to form the prelayer being combined with the definitive third combustion to form the barrier layer, and this combustion beginning in reductive operating mode/reaction and ending in oxidizing operating mode/reaction.

12. Process according to claim 7 or 8, gaseous or liquid forerunner materials with functional groups, which are in a position to react with the radical spots left behind by the combustion process, being introduced into the inside of the vessel directly after the final shaping of the vessel (1), thus after the ignition of the oxyhydrogen gas or similar in the vessel (1).

13. Process according to claim 12, nitrogen being added to the flammable gas mixture in order to form a satisfactorily adhering blocking or barrier coating on the inner surface of the preform.

14. Process according to claim 7 or 8, the oxygen-containing gas mixture reacting, while exposed to the action of UV radiation of a lamp, preferably an excimer lamp, with the prelayer to form the barrier layer.

15. Process according to claim 7 or 8, nitrogen or xenon being added to the oxygen-containing, flammable gas mixture which is then ignited for the second combustion and emits UV radiation.

16. Process for blow moulding a vessel (1) from a plastic preform (2) which, after heating, is pre-formed by a gas which is blown into the vessel (1, 2) at low pressure of between 2 bar and 15 bar with an accompanying increase in its internal volume and is shaped into its definitive form by ignition of a blown-in, combustible gas by the higher blowing pressure arising during the combustion, **characterized in that** a precursor material on the basis of silicon, magnesium, aluminium, titanium, zinc, zirconium, boron, cerium, calcium or tin compound or the like or on the basis of mixtures thereof is applied in the form of a gas, vapour, mist or a ductile solid as prelayer to the inner surface of the preform (2) before the pre-forming of the vessel (1) at low pressure, oxygen-containing, flammable gas mixture is then introduced into the preform (2) and ignited, whereby the preform (2) is shaped into its definitive form by the higher blowing pressure arising during the combustion and simultaneously the blocking or barrier coating on the basis of silicon oxide, silicon oxynitride, magnesium oxide, aluminium oxide, titanium oxide, titanium nitride, zinc oxide, zirconium oxide, boron oxide, cerium oxide, calcium oxide or tin oxide or on the basis of mixtures thereof is formed on the inner surface of the vessel.

17. Process for blow moulding a vessel (1) from a plastic preform (2), which is pre-formed after heating by a gas blown into the vessel (1, 2) at low pressure of between 2 bar and 15 bar with an accompanying increase in its internal volume and is then shaped out into its definitive form by blowing in a further gas at higher blowing pressure of between 20 bar and 600 bar, **characterized in that** a combustible precursor gas is blown into the expanded, shaped out vessel (1) and ignited and through the combustion, a blocking or barrier coating is formed on the inner surface of the vessel (1).

18. Process according to claim 17, the precursor gas being formed on the basis of silicon, magnesium, aluminium, titanium, zinc, zirconium, boron, cerium, calcium or tin oxide or the like or on the basis of mixtures thereof and a blocking or barrier coating resulting on the basis of silicon oxide, silicon oxynitride, magnesium oxide, aluminium oxide, titanium oxide, titanium nitride, zinc oxide, zirconium oxide, boron oxide, cerium oxide, calcium oxide or tin oxide or the like or on the basis of mixtures thereof.

19. Process according to claim 17, the precursor gas consisting of at least one volatile hydrocarbon compound based on alkanes or alkenes, alkines, aromatics, alkanols, ethers, aldehydes, ketones, epoxides, organic acids, esters or corresponding anhydrides.

## Revendications

1. Procédé pour le moulage par soufflage d'un contenant (1) à partir d'une préforme (2) en matière plastique, ledit contenant étant préformé, après réchauffage, par un gaz soufflé dans le contenant (1, 2) à une basse pression comprise entre 2 bar et 15 bar, entraînant une augmentation de son volume intérieur et étant moulé à sa forme définitive par inflammation d'un gaz inflammable soufflé, du fait de la pression de soufflage très élevée provoquée lors de la combustion, **caractérisé en ce que** le gaz inflammable est mélangé à un gaz précurseur, **en ce que** ce mélange est enflammé et **en ce qu'**un revêtement de blocage ou revêtement barrière est formé sur la surface intérieure du contenant (1) du fait de la combustion.

2. Procédé selon la revendication 1, dans lequel le gaz précurseur est formé à base de silicium, de magnésium, d'aluminium, de titane, de zinc, de zirconium, de bore, de cérium, de calcium, d'étain ou similaire ou à base de mélanges de ceux-ci, et un revêtement de blocage ou revêtement barrière à base d'oxyde de silicium, d'oxynitrure de silicium, d'oxyde de magnésium, d'oxyde d'aluminium, d'oxyde de titane, de nitrure de titane, d'oxyde de zinc, d'oxyde de zirconium, d'oxyde de bore, d'oxyde de cérium, d'oxyde de calcium ou d'oxyde d'étain ou similaire ou à base de mélanges de ceux-ci est obtenu.

3. Procédé selon la revendication 1, dans lequel le gaz précurseur est composé d'au moins un composé d'hydrocarbure volatil à base d'alcanes ou d'alcènes, d'alcynes, de composés aromatiques, d'alcanols, d'éthers, d'aldéhydes, de cétones, d'époxydes, des acides organiques, d'esters ou des anhydrides correspondants.

4. Procédé selon la revendication 1, dans lequel le gaz précurseur est composé d'un mélange d'au moins un composé métallique volatil et d'au moins un composé d'hydrocarbure volatil.

5. Procédé selon l'une quelconque des revendications 1 à 4, dans lequel le mélange du gaz précurseur a lieu avant le préformage et le revêtement de blocage ou revêtement barrière est formé lors du moulage final.

6. Procédé selon l'une quelconque des revendications 1 à 4, dans lequel le gaz précurseur est introduit dans le contenant (1) après le moulage final et est enflammé par l'amorçage d'une deuxième combustion pour former le revêtement de blocage ou revêtement barrière sur la surface intérieure du contenant (1).

7. Procédé pour le moulage par soufflage d'un contenant (1) à partir d'une préforme (2) en matière plastique, ledit contenant étant préformé, après réchauffage, par un gaz soufflé dans le contenant (1, 2) à une basse pression comprise entre 2 bar et 15 bar, entraînant une augmentation de son volume intérieur et étant moulé dans sa forme définitive par inflammation d'un gaz inflammable soufflé, du fait de la pression de soufflage très élevée provoquée lors de la combustion, **caractérisé en ce qu'**une matière de précurseur à base d'un composé de silicium, de magnésium, d'aluminium, de titane, de zinc, de zirconium, de bore, de cérium, de calcium, d'étain ou similaire ou à base de mélanges de ceux-ci est appliquée sous la forme d'un gaz, d'une vapeur ou d'un brouillard pour former une précouche sur la surface intérieure d'une ébauche (1, 1') puis **en ce qu'**un mélange gazeux inflammable oxygéné est introduit dans l'ébauche (1, 1') et enflammé et un revêtement de blocage ou revêtement barrière à base d'oxyde de silicium, d'oxynitrure de silicium, d'oxyde de magnésium, d'oxyde aluminium, d'oxyde de titane, de nitrure de titane, d'oxyde de zinc, d'oxyde de zirconium, d'oxyde de bore, d'oxyde de cérium, d'oxyde de calcium, d'oxyde d'étain ou à base de mélanges de ceux-ci est formé sur la surface intérieure du contenant du fait de cette combustion.

8. Procédé pour le moulage par soufflage d'un contenant (1) à partir d'une préforme (2) en matière plastique, ledit contenant étant préformé, après réchauffage, par un gaz soufflé dans le contenant (1, 2) à une basse pression comprise entre 2 bar et 15 bar, entraînant une augmentation de son volume intérieur et étant moulé dans sa forme définitive par inflammation d'un gaz inflammable soufflé, du fait de la pression de soufflage très élevée provoquée lors de la combustion, **caractérisé en ce qu'**une matière de précurseur composée au moins d'un composé d'hydrocarbure volatil à base d'alcanes, d'alcènes, d'alcynes ou de composés aromatiques, d'alcanols, d'éthers, d'aldéhydes, de cétones, d'époxydes, des acides organiques, d'esters ou des anhydrides correspondants est appliquée sous la forme d'un gaz, d'une vapeur ou d'un brouillard pour former une précouche sur la surface intérieure d'une ébauche (1, 1') puis **en ce qu'**un mélange gazeux inflammable oxygéné est introduit dans l'ébauche (1, 1') et enflammé, et **en ce qu'**un revêtement de blocage ou revêtement barrière à base de carbone est formé sur la surface intérieure du contenant du fait de cette combustion.

9. Procédé selon la revendication 7, dans lequel le mélange gazeux inflammable de la deuxième combustion contient de l'ozone.

10. Procédé selon la revendication 7, dans lequel une combustion incomplète de la matière de précurseur, de préférence d'un composé volatil de silicium, suit un schéma réducteur/une réaction réductrice pour oxyder la matière de précurseur avec un composé oxydant en quantité insuffisante et un autre gaz oxygéné est ensuite introduit dans le contenant (1) et mélangé à au moins un gaz inflammable, le mélange étant enflammé pour produire une troisième combustion finale, le mélange gazeux ayant un excès de gaz oxydant pour la combustion de la précouche et la création du revêtement intérieur se faisant selon un schéma oxydant/une réaction oxydante.

11. Procédé selon la revendication 7 ou 10, dans lequel la combustion incomplète de la matière de précurseur pour former la précouche est combinée à la troisième combustion finale pour former la couche de blocage et cette combustion commence selon un schéma réducteur/une réaction réductrice et se terminant selon un schéma oxydant/une réaction oxydante.

12. Procédé selon la revendication 7 ou 8, dans lequel la matière de précurseur fluide ou gazeuse avec les groupes fonctionnels en mesure de réagir avec les radicaux restant à la fin du processus de combustion est introduite à l'intérieur du contenant et ce directement après le moulage final du contenant (1), donc après l'inflammation du gaz détonant ou similaire dans le contenant (1).

13. Procédé selon la revendication 12, dans lequel de l'azote est ajouté au mélange gazeux inflammable pour former un revêtement de blocage ou revêtement barrière très adhérant sur la surface intérieure de la préforme.

14. Procédé selon la revendication 7 ou 8, dans lequel le mélange gazeux oxygéné réagit avec la préforme sous l'effet d'un rayonnement UV, de préférence d'une lampe à excimère, pour former la couche de blocage.

15. Procédé selon la revendication 7 ou 8, dans lequel le mélange gazeux inflammable oxygéné est mélangé à de l'azote ou à du xénon, le mélange gazeux étant alors enflammé pour la deuxième combustion et émettant un rayonnement UV.

16. Procédé pour le moulage par soufflage d'un contenant (1) à partir d'une préforme (2) en matière plastique, ledit contenant étant préformé, après réchauffage, par un gaz soufflé dans le contenant (1, 2) à une basse pression comprise entre 2 bar et 15 bar, entraînant une augmentation de son volume intérieur et étant moulé à sa forme définitive par inflammation d'un gaz inflammable soufflé, du fait de la pression de soufflage très élevée provoquée lors de la combustion, **caractérisé en ce qu'**une matière de précurseur à base d'un composé de silicium, de magnésium, d'aluminium, de titane, de zinc, de zirconium, de bore, de cérium, de calcium, d'étain ou similaire ou à base de mélanges de ceux-ci est appliquée sous la forme d'un gaz, d'une vapeur, d'un brouillard ou d'une matière solide ductile à une basse pression en tant que précouche sur la surface intérieure de la préforme (2) avant le préformage du contenant (1), puis un mélange gazeux inflammable oxygéné est introduit dans la préforme (2) et enflammé, permettant ainsi à la préforme (2), du fait de la pression de soufflage plus élevée produite lors de la combustion, de prendre sa forme définitive et au revêtement de blocage ou revêtement barrière à base d'oxyde de silicium, d'oxynitrure de silicium, d'oxyde de magnésium, d'oxyde aluminium, d'oxyde de titane, de nitrure de titane, d'oxyde de zinc, d'oxyde de zirconium, d'oxyde de bore, d'oxyde de cérium, d'oxyde de calcium, d'oxyde d'étain ou à base de mélanges de ceux-ci de se former sur la surface intérieure du contenant.

17. Procédé pour le moulage par soufflage d'un contenant (1) à partir d'une préforme (2) en matière plastique, ledit contenant étant préformé, après réchauffage, par un gaz soufflé dans le contenant (1, 2) à une basse pression comprise entre 2 bar et 15 bar, entraînant une augmentation de son volume intérieur puis moulé par soufflage d'un autre gaz dans le contenant à une pression de soufflage plus élevée comprise entre 20 bar et 600 bar, **caractérisé en ce qu'**un gaz précurseur inflammable est soufflé et enflammé dans le contenant (1) déformé et agrandi, et un revêtement de blocage ou revêtement barrière est formé sur la surface intérieure du contenant (1) du fait de la combustion.

18. Procédé selon la revendication 17, dans lequel le gaz précurseur est formé à base d'oxyde de silicium, de magnésium, d'aluminium, de titane, de zinc, de zirconium, de bore, de cérium, de calcium, d'étain ou similaire ou à base de mélanges de ceux-ci et un revêtement de blocage ou revêtement barrière à base d'oxyde de silicium, d'oxynitrure de silicium, d'oxyde de magnésium, d'oxyde aluminium, d'oxyde de titane, de nitrure de titane, d'oxyde de zinc, d'oxyde de zirconium, d'oxyde de bore, d'oxyde de cérium, d'oxyde de calcium, d'oxyde d'étain ou similaire ou à base de mélanges de ceux-ci obtenu.

19. Procédé selon la revendication 17, dans lequel le gaz précurseur est composé d'au moins un composé d'hydrocarbure volatil à base d'alcanes ou d'alcènes, d'alcynes, de composés aromatiques, d'alcanols, d'éthers, d'aldéhydes, de cétones, de résines époxyde, des acides organiques, d'esters ou des anhydrides correspondants.
